Europäisches Patentamt

(19) European Patent Office (11) Numéro de publication: **0 007 861**

Office européen des brevets **B1**

(12) **FASCICULE DE BREVET EUROPEEN**

(45) Date de publication du fascicule de brevet: **12.08.81** (51) Int. Cl.³: **B 60 R 1/06**

(21) Numéro de dépôt: **79400512.4**

(22) Date de dépôt: **19.07.79**

(54) Dispositif de réglage d'un rétroviseur notamment pour véhicule.

(30) Priorité: **27.07.78 FR 7822276**

(43) Date de publication de la demande:
**06.02.80 Bulletin 80/3**

(45) Mention de la délivrance du brevet:
**12.08.81 Bulletin 81/32**

(84) Etats Contractants Désignés:
**DE GB IT SE**

(56) Documents cités:
**DE - A - 2 100 766**
**DE - A - 2 550 499**
**FR - A - 2 129 234**
**FR - A - 2 314 642**
**FR - A - 2 380 166**

(73) Titulaire: **Manzoni, Stéphane**
**1, rue Pasteur**
**F-39200 Saint-Claude (FR)**

(72) Inventeur: **Manzoni, Stéphane**
**1, rue Pasteur**
**F-39200 Saint-Claude (FR)**

(74) Mandataire: **Moulines, Pierre et al,**
**Cabinet BEAU de LOMENIE 55, rue d'Amsterdam**
**F-75008 Paris (FR)**

Courier Press, Leamington Spa, England.

Dispositif de réglage d'un rétroviseur notamment pour véhicule

La présente invention a pour objet un dispositif de réglage de rétroviseur, notamment pour véhicule.

Le brevet français FR—A—2380166 a pour objet un dispositif de réglage d'un rétroviseur notamment pour véhicule, comportant un organe de support fixé sur le gousset d'une porte de véhicule et traversant celui-ci afin de permettre le passage des organes de commande à l'intérieur du véhicule pour régler l'orientation d'un boîtier et d'un miroir de rétroviseur autour d'un axe vertical et d'un axe horizontal. Dans l'organe de support, est monté pivotant suivant un axe horizontal un corps cylindrique présentant à l'une de ses extrémités un moyen de fixation sur lequel est monté suivant un axe vertical le boîtier du rétroviseur, ledit corps comportant un alésage central dans lequel est monté rotatif un axe muni à l'une de ses extrémités d'un premier organe de manoeuvre et à son autre extrémité de moyens d'entraînement dudit corps suivant un axe horizontal, ledit corps présentant deux alésages latéraux dans lesquels sont montées coulissantes deux tiges parallèles reliées à l'une de leurs extrémités à un deuxième organe de manoeuvre et en appui à leur autre extrémité contre les faces d'un organe de commande relié au boîtier suivant un axe vertical.

Pour obtenir le mouvement "ciel et terre" suivant l'axe horizontal de pivotement, on utilise dans le brevet français FR—A—2380166 un pignon monté à l'extrémité de la tige centrale et qui engrène avec une roue dentée montée rotative sur l'organe de support et présentant un maneton excentré sur lequel est monté un coulisseau se déplaçant dans une rainure prévue dans un prolongement du corps cylindrique.

Toutefois, malgré le soin, la précision apportés à la réalisation de ce dispositif et les tolérances nécessaires des différentes pièces, il est très difficile d'obtenir une absence de débattement minimal "ciel et terre" de la coupelle du rétroviseur même sous l'effet d'une faible sollicitation manuelle et il en résulte un déréglage du miroir.

La présente invention a pour objet un perfectionnement au dispositif permettant de remédier à cet inconvénient.

Conformément à la présente invention, l'axe central présente du côté opposé au premier organe de manoeuvre, un pignon qui engrène avec une roue dentée solidaire d'une came en forme de spirale dont le contour est maintenu en contact avec un bossage prévu sur un prolongement du corps cylindrique.

Avec cette disposition, le rétroviseur sous une poussée manuelle extérieure reste en position fixe dans un sens et il se déplace et revient en position initiale sous l'effet d'un organe élastique à l'arrêt de la poussée dans l'autre sens. De ce fait, le dispositif est indéréglable et irréversible.

Par ailleurs, il faut effectuer deux tours du premier organe de manoeuvre pour le déplacement "ciel et terre" dans un même sens, la came effectuant un tour complet, d'où il résulte un réglage plus fin et plus doux qu'avec le dispositif antérieur dans lequel il fallait seulement un tour de l'organe de manoeuvre.

Enfin la poussée de l'organe élastique permet de rattraper le jeu entre les portées de l'organe de support et du corps cylindrique. Ce jeu parasitaire engendrant des vibrations du rétroviseur étant supprimé avec le dispositif perfectionné, il est possible d'utiliser des tolérances d'usinage moins serrées et de supprimer les vibrations.

Suivant une autre caractéristique de l'invention, sur l'axe central qui comporte un pignon engrenant avec la roue dentée solidaire de la came en forme de spirale, il est prévu un premier organe de transmission qui engrène avec un autre organe de transmission solidaire d'un câble d'entraînement et un deuxième organe de transmission engrène avec un organe de transmission solidaire d'un autre câble d'entraînement, le deuxième organe de transmission étant solidaire d'un pignon qui engrène avec deux pignons fixés à l'une des extrémités de vis filetées à pas contraire engagées dans des parties taraudées du corps cylindrique, l'autre extrémité des deux vis filetées venant en appui contre l'extrémité de deux poussoirs coulissants librement dans des alésages du corps cylindrique, et dont l'autre extrémité agit sur un palonnier solidaire du boîtier.

Par ailleurs, l'entraînement des câbles flexibles peut être réalisé manuellement au moyen d'un bouton de manoeuvre ou d'un moto-réducteur électrique.

D'autres caractéristiques et avantages de l'invention seront mieux compris à la lecture de la description qui va suivre d'un mode de réalisation et en se référant aux dessins annexés, dans lesquels:

— la figure 1, est une vue en coupe longitudinale d'un mode de réalisation du dispositif de réglage d'un rétroviseur;

— la figure 2 est une vue en coupe suivant la ligne II—II de la figure 1;

— la figure 3 est une vue en perspective de la came en forme de spirale;

— la figure 4 est une vue en élévation et en coupe longitudinale d'un mode de réalisation perfectionné du dispositif de réglage d'un rétroviseur;

— la figure 5 est une vue en coupe suivant la ligne V—V de la figure 4;

— la figure 6 est une vue en coupe suivant la ligne VI—VI de la figure 5;

— la figure 7 est une vue en coupe suivant la ligne VII—VII de la figure 4;

— la figure 8 est une vue en coupe suivant la ligne VIII—VIII de la figure 9 du dispositif de commande par moto-réducteur;

— la figure 9 est une vue en coupe suivant la ligne IX—IX de la figure 8;

— la figure 10 est une vue en coupe analogue à celle de la figure 5 mais avec un dispositif limiteur de couple sur les roues tangentes;

— la figure 11 est une vue en coupe suivant la ligne XI—XI de la figure 10.

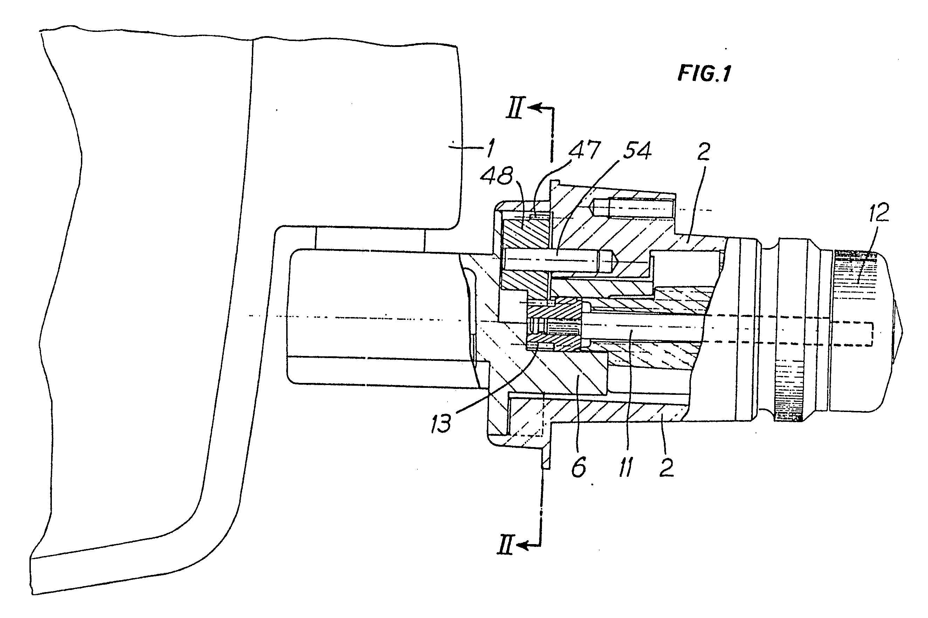

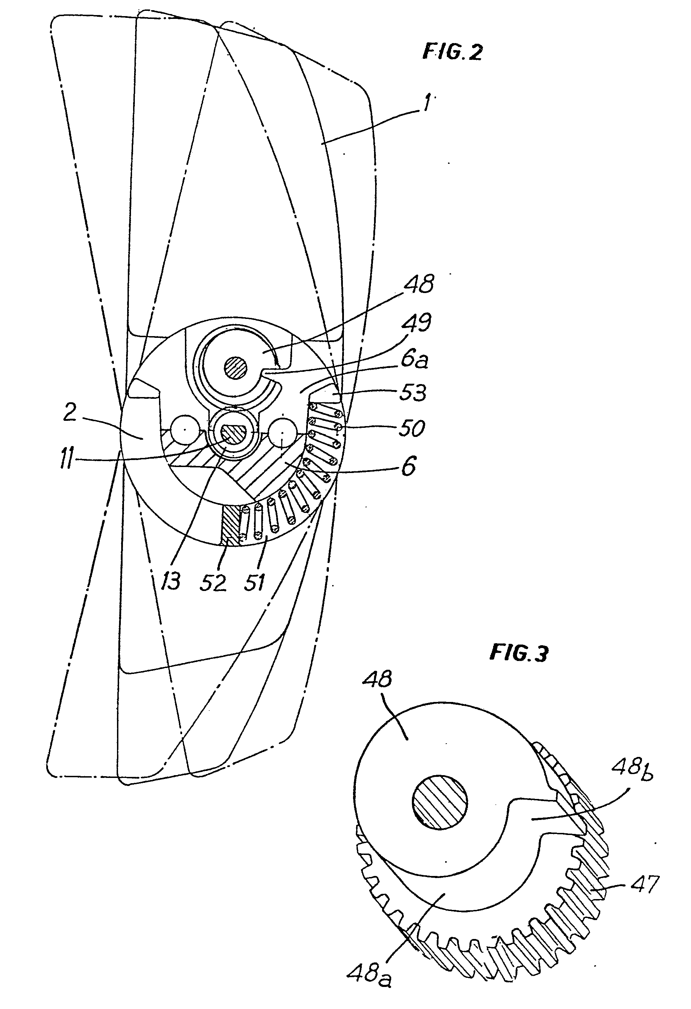

Aux figures 1 et 2, on a représenté un mode de réalisation du dispositif de réglage d'un rétroviseur, qui comporte les mêmes éléments que le dispositif faisant l'objet du brevet français n° 77 03 979, sauf en ce qui concerne les moyens de déplacement "ciel et terre" du boîtier suivant un axe horizontal.

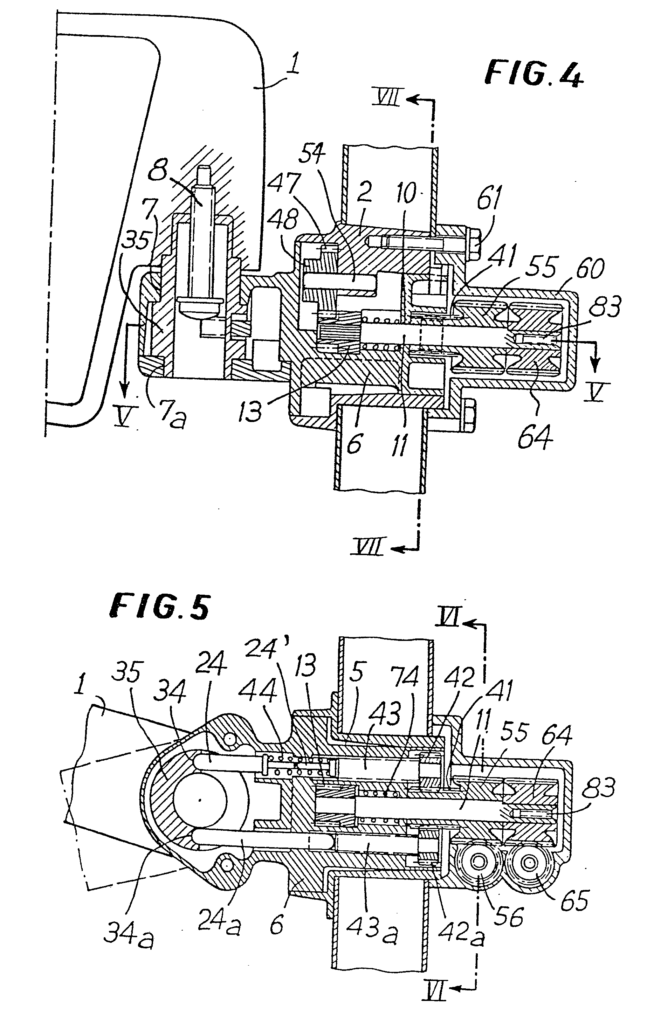

Sur l'une des extrémités de l'axe central 11 opposée à celle sur laquelle est fixé le premier organe de manoeuvre 12, est claveté un pignon 13 qui engrène avec une roue dentée 47 montée rotative sur un axe 54 fixé sur l'organe de support 2, ladite roue dentée étant solidaire d'une came 48 en forme de spirale (figures 2, 3) dont le contour 48a est maintenu en contact avec un bossage 49 du corps cylindrique 6, sous l'action d'un ressort hélicoïdal 50. Ce ressort 50 qui est disposé dans un logement 51 en forme d'arc de cercle, ménagé entre le corps cylindrique 6 et l'organe de support 2, est en appui d'un côté contre une paroi 52 de l'organe de support 2 et de l'autre côté contre une paroi 53 du corps cylindrique 6. La came 48 comporte une face radiale 48b entre les deux extrémités de son contour 48a en forme de spirale, ladite face constituant un organe de butée du bossage 49.

En fonctionnement, le bossage 49 du corps cylindrique 6, sur lequel est monté le boîtier 1 du rétroviseur, est en appui sous l'action du ressort 50 contre le contour 48a de la came 48 en forme de spirale, de telle sorte qu'une rotation de la came, au moyen de la roue dentée 47 et du pignon 13 actionné par l'organe de manoeuvre 12, entraîne un déplacement angulaire du corps cylindrique 6 autour de l'axe horizontal et, par suite, un déplacement angulaire "ciel-terre" du boîtier de rétroviseur, ainsi qu'il est représenté à la figure 2.

Le véhicule étant en marche avant, le boîtier du rétroviseur, sous la poussée du vent, vient renforcer l'appui du ressort 50, le corps 6 étant en butée sur le profil de la came 48. Il serait également possible de supprimer le ressort 50 en assurant une liaison convenable entre le corps 6 et la came 48, afin d'avoir un entraînement dans les deux sens.

Aux figures 4, 5, 6 et 7 on a représenté un autre mode de réalisation du dispositif de réglage d'un rétroviseur. Ce dispositif de réglage comprend un organe de support tubulaire 2 traversant un gousset d'une porte de véhicule sur laquelle ledit organe de support 2 est maintenu par un carter 60 fixé au moyen de vis 61 sur l'organe de support.

L'organe de support 2 présente un alésage 5 dans lequel est monté pivotant un corps cylindrique 6 présentant à l'une de ses extrémités deux paliers 7, 7a dans lesquels est monté pivotant un palonnier 35 sur lequel est fixé au moyen d'une vis 8 un boîtier 1 de rétroviseur comportant un miroir.

Le corps 6 présente un alésage central 10 dans lequel est monté rotatif un axe 11 qui, comme il a été décrit ci-dessus, porte à l'une de ses extrémités un pignon 13 qui engrène avec une roue dentée 47 solidaire de la came 48. A son autre extrémité, l'axe 11 porte une roue tangente 64 qui est fixée sur celui-ci au moyen d'une vis 83 et qui engrène avec une vis sans fin 65 solidaire en rotation d'un câble flexible de transmission. Le pignon 13 est soumis à l'action d'un ressort 74 en appui contre le corps cylindrique 6.

Le palonnier 35 sur lequel est monté le boîtier 1 du rétroviseur pour son pivotement suivant un axe vertical est obtenu au moyen des poussoirs 24, 24a qui sont en appui par leur extrémité hémisphérique contre les faces 34, 34a du palonnier 35.

L'autre extrémité des poussoirs 24—24a vient en appui sur l'extrémité des 2 vis à pas contraire 43—43a engagées dans des trous taraudés correspondants, prévus dans le corps cylindrique 6. L'un des poussoirs 24 est divisé en deux éléments 24, 24' entre lesquels est disposé un ressort 44.

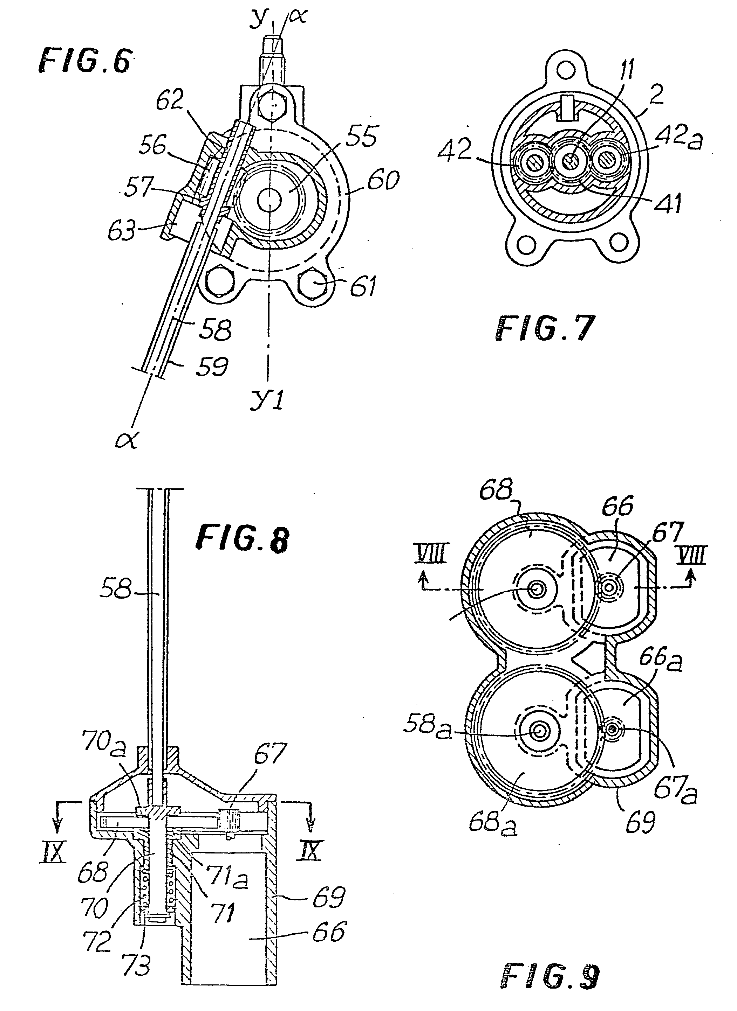

A leur extrémité opposée au palonnier 35, les vis filetées 43, 43a sont munies de pignons 42, 42a qui engrènent avec un pignon central 41 monté rotatif sur l'axe central 11. Le pignon 41 est solidaire d'une roue tangente 55 qui prolonge le pignon 41 et qui engrène avec une vis sans fin 56 calée par l'intermédiaire d'un arbre creux 57 sur câble flexible 58 disposé dans une gaine 59 (figure 6).

L'arbre 57 est monté rotatif d'un côté dans un alésage 62 du carter 60 et de l'autre côté dans un palier 63 fixé sur ledit carter.

Le carter 60 renferme la roue tangente 55 et la roue tangente 64 identique qui est fixée à l'une des extrémités de l'axe 11.

Les câbles flexibles tels que 58 peuvent être entraînés manuellement au moyen d'un bouton (non représenté) fixé à l'une des extrémités desdits câbles.

Si on agit sur le câble 58 solidaire de la vis sans fin 65, on entraîne en rotation la roue tangente 64, l'axe 11, le pignon 13 et la roue dentée 47 solidaire de la came 48. Comme il a été décrit ci-dessus, la came 48, lors de sa rotation, entraîne un déplacement angulaire du corps cylindrique 6 autour de l'axe horizontal et, par suite, un déplacement angulaire du corps cylindrique 6 autour de l'axe horizontal et, par suite, un déplacement angulaire "ciel-terre" du boîtier de rétroviseur ainsi qu'il est représenté à la figure 2.

Pour obtenir la rotation du rétroviseur autour de l'axe vertical, on imprime une rotation au câble 58 solidaire de la vis sans fin 56 qui entraîne en rotation par la roue tangente 55 le pignon 41 et les pignons 42, 42a. Du fait que les poussoirs 24, 24a sont en appui contre les vis 43, 43a de pas contraire engagées dans des trous taraudés, il en résulte un déplacement des poussoirs 24, 24a qui agissent par un mouvement axial inverse sur les faces 34, 34a du palonnier 35, ce dernier entraînant en rotation autour d'un axe vertical suivant un déplacement angulaire "gauche-droite" le boîtier 1 de rétroviseur comme présenté à la figure 5.

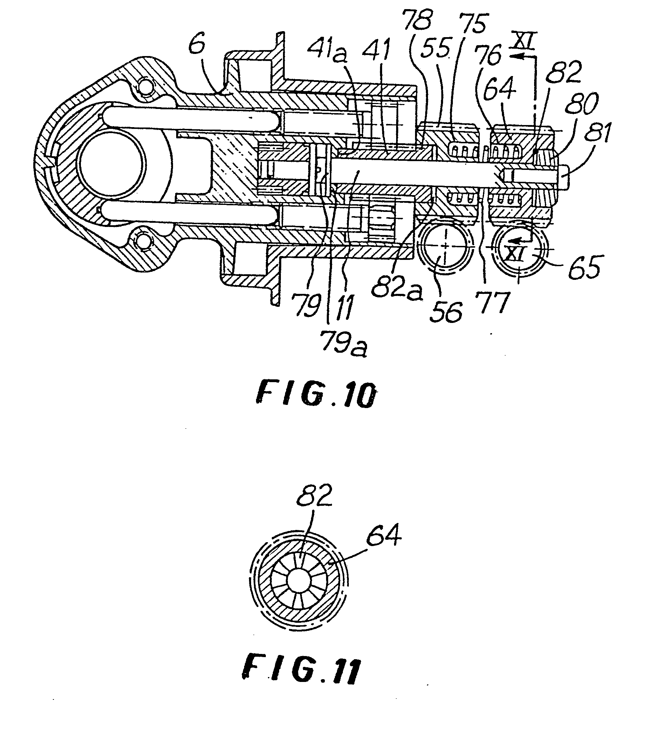

Suivant un autre mode de réalisation représenté aux figures 8 et 9, les câbles 58, 58a sont entraînés au moyen de moteurs électriques 66, 66a par l'intermédiaire d'un couple de pignons 67, 68 et 67a, 68a pour réduire la vitesse communiquée aux câbles 58, 58a qui entraînent les vis sans fin 55 et 64.

L'ensemble ainsi constitué par les moteurs et les pignons est monté dans un carter 69.

Comme représenté à la figure 8, chaque câble est entraîné par l'intermédiaire d'un limiteur de couple qui est constitué d'un axe 70 solidaire du câble de transmission 58, 58a et sur lequel est monté en rotation libre, le pignon 68, 68a qui est maintenu serré entre un épaulement 70a de l'axe 70 et un épaulement 71a d'un manchon 71 monté coulissant sur l'axe 70 et soumis à l'action d'un ressort 72 en appui contre une rondelle 73 fixée sur l'axe 70.

Suivant un autre mode de réalisation représenté aux figures 10 et 11, le limiteur de couple est disposé au niveau des roues tangentes 55 et 64 qui sont montées coulissantes et en rotation libre sur l'axe central 11. Les roues 55—64 présentent des chambrages 75—76 dans lesquels est engagé un ressort de compression 77 de telle sorte que les roues 55 et 64 sont repoussées respectivement contre un épaulement 78 du pignon 41, lui-même en appui contre la face 41a du corps 6 et contre une butée 80 fixée au moyen d'une vis 81 à l'extrémité de l'axe 11. La rondelle spéciale d'arrêt 79 positionnée sur l'axe 11 reçoit la poussée axiale du ressort 77 en appui en 79a sur l'alésage du corps 6. La butée 80 et l'épaulement 78 comportent des organes de crabotage 82, 82a qui coopèrent avec des organes de crabotage correspondants prévus sur les faces de contact des roues tangentes.

Bien entendu, diverses modifications peuvent être apportées par l'homme de l'art aux dispositifs ou procédés qui viennent d'être décrits uniquement à titre d'exemple non limitatif, sans sortir du cadre de l'invention.

## Revendications

1. Dispositif de réglage d'un rétroviseur notamment pour véhicule, comportant un organe de support (2) fixé sur le gousset d'une porte de véhicule et traversant celui-ci afin de permettre le passage des organes de commande (11, 43) à l'intérieur du véhicule pour régler l'orientation d'un boîtier (1) et d'un miroir de rétroviseur autour d'un axe vertical et d'un axe horizontal, ledit organe de support (2) comportant intérieurement un corps cylindrique (6) monté pivotant suivant un axe horizontal et présentant à l'une de ses extrémités un moyen de fixation (7) sur lequel est monté pivotant suivant un axe vertical le boîtier (1) du rétroviseur, ledit corps (6) comportant un alésage central dans lequel est monté rotatif un axe (11) muni à l'une de ses extrémités d'un premier organe de manoeuvre (12, 64) et à son autre extrémité de moyens d'entraînement (13, 48) dudit corps (6) suivant un axe horizontal, ledit corps (6) présentant deux alésages latéraux dans lesquels sont montées coulissantes deux tiges (24, 43) parallèles reliées à l'une de leurs extrémités à un deuxième organe de manoeuvre (55) et en appui à leur autre extrémité contre les faces (34) d'un organe de commande (35) relié au boîtier (1) suivant un axe vertical, caractérisé en ce que l'axe central (11) présente, du côté opposé au premier organe de manoeuvre (12, 64), un pignon (13) qui engrène avec une roue dentée (47) solidaire d'une came (48) en forme de spirale dont le contour (48a) est maintenu en contact avec un bossage (49) prévu sur un prolongement (6a) du corps cylindriaue (6).

2. Dispositif suivant la revendication 1, caractérisé en ce que le corps cylindrique (6) est soumis à l'action d'un organe élastique (50) en appui contre l'organe de support (2) et repoussant le bossage (49) contre la came (48) en forme de spirale.

3. Dispositif suivant la revendication 2, caractérisé en ce que, entre l'organe de support (2) et le corps cylindrique (6), est ménagé un logement (51) en forme d'arc de cercle dans lequel est disposé un ressort hélicoïdal (50) en appui à l'une de ses extrémités contre l'une des parois (52) du support (2) et, de l'autre côté, contre une face (53) du corps cylindrique (6).

4. Dispositif suivant la revendication 1, caractérisé en ce que, sur l'ace central (11) qui comporte le pignon (13) engrenant avec la roue dentée (47) solidaire de la came (48) forme de spirale, il est prévu premier organe de transmission (64) qui engrène avec un autre organe de transmission (65) solidaire d'un câble d'entraînement et en ce qu'un deuxième organe de transmission (55) engrène avec un organe de transmission (56) solidaire d'un autre câble d'entraînement (58), le deuxième organe de transmission (55) étant solidaire d'un pignon (41) qui engrène avec deux pignons (42) fixés à l'une des extrémités de deux vis filetées (43) de pas contraire, engagées dans des parties taraudées du corps cylindrique (6) et qui, par l'intermédiaire de deux poussoirs (24) en appui sur l'extrémité des deux vis filetées (43), agissent sur un palonnier (35) solidaire du boîtier (1) du rétroviseur.

5. Dispositif suivant la revendication 4, caractérisé en ce que les organes de transmission (64, 55, 65, 56) sont constitués d'une roue tangente (64, 55) et d'une vis sans fin (65, 56) sur laquelle est fixé par l'intermédiaire d'un arbre creux (57) serti un câble flexible (58) de transmission.

6. Dispositif suivant les revendications 4 et 5, caractérisé en ce que les câbles de transmission (58) sont actionnés manuellement au moyen d'un bouton de manoeuvre fixé à l'extrémité de chaque câble.

7. Dispositif suivant les revendications 4 et 5, caractérisé en ce que chaque câble (58) est entraîné par un moto-réducteur électrique (66).

8. Dispositif suivant la revendication 7, caractérisé en ce que le pignon d'entraînement (68) du câble de transmission (58) est muni d'un limiteur de couple qui est constitué d'un axe (70) solidaire du câble de transmission (58) et sur lequel est monté en rotation libre le pignon (68) qui est maintenu serré entre un épaulement (70a) dudit axe (70) et un épaulement (71a) d'un manchon (71) soumis à l'action d'un organe élastique (72).

9. Dispositif suivant la revendication 7, caractérisé en ce que les roues tangentes (64, 55) sont montées coulissantes en rotation libre sur l'axe central (11) et sont repoussées sous l'action d'un organe élastique (77), respectivement contre une butée (80) solidaire de l'axe central (11) et contre un épaulement (78) du pignon (41) entraînant les vis filetées (43), ladite butée (80) et ledit épaulement (78) comportant des organes de crabotage (82, 82a) qui coopèrant avec des organes de crabotage correspondants prévus sur les faces de contact des roues tangentes (64, 55) et dont une rondelle butée solidaire de l'axe central (11) permet la liaison élastique des organes de crabotage (82, 82a).

10. Dispositif suivant la revendication 1, caractérisé en ce que l'une des tiges de poussée (24) est constituée de deux éléments (24, 24') entre lesquels est disposé un organe élastique (44) en compression.

## Claims

1. Control device for rearview mirror, such as for vehicle, comprising a support member (2) secured on the gusset of a vehicle door and traversing through said gusset in order to allow the passage of the control members (11, 43) inside the vehicle in order to directionally adjust the position of a casing (1) and a rearview mirror about a vertical axis and an horizontal axis, the said support member (2) comprising on the inside a cylindrical body (6) mounted for pivoting about a horizontal axis and having at one of its ends a fastening means (7) on which the casing (1) of the rearview mirror is mounted for pivoting about its vertical axis, the said body (6) comprising a central bore inside which an axle (11) is rotatably mounted which axle is provided at one of its ends with a first operating member (12, 64) and at its other end with means (13, 48) for driving the said body (6) about a horizontal axis, which body (6) presents two lateral bores inside which are slidably mounted two parallel rods (24, 43) joined at one end to a second operating member (55) and resting at the other end against the faces (34) of a control member (35) connected to the casing (1) along a vertical axis, characterized in that the central axle (11) is provided, on the side opposite the first operating member (12, 64) with a pinion (13) which meshes with a toothed wheel (47) integral with a spiral-shaped cam (48) the outline (48a) of which is held in contact with a boss (49) provided on an extension (6A) of the cylindrical body (6).

2. Device according to claim 1, characterized in that the cylindrical body (6) is subjected to the action of an elastic member (50) in resting contact against the support member (2) and pushing the boss (49) against the spiral-shaped cam (48).

3. Device according to claim 2, characterized in that, between the support member (2) and the cylindrical body (6), there is provided a housing (51) shaped in arch of circle, inside which is disposed a helical spring (50) resting at one of its ends against one of the walls (52) of the support (2) and on the other side, against one face (53) of the cylindrical body (6).

4. Device according to claim 1, characterized in that, on the central axle (11) which comprises the pinion (13) meshing with the toothed wheel (47) integral with the spiral-shaped cam (48), there is provided a first transmission member (64) which meshes with another transmission member (65) integral with a driving cable and in that a second transmission member (55) meshes with a transmission member (56) integral with another driving cable (58), the second transmission member (55) being integral with a pinion (41) which meshes with two pinions (42) fixed at one of the ends of two reversely-threaded screws, engaged in tappings provided in the cylindrical body (6), and which, through the action of two push-members (24) resting against the end of the two screws (43) act on a compensating member (35) integral with the casing (1) of the rearview mirror.

5. Device according to claim 4, characterized in that the transmission members (64, 55, 65, 56) are constituted of a tangent wheel (64, 55) and of an endless screw (65, 56) on which a flexible transmission cable (58) is fixed via a crimped hollow shaft (57).

6. Device according to claims 4 and 5, characterized in that the transmission cables (58) are actuated by hand by means of an operating knob fitted at the end of each cable.

7. Device according to claims 4 and 5, characterized in that each cable (58) is driven by an electrical gear reduction unit (66).

8. Device according to claim 7, characterized in that the driving pinion (68) of the transmission cable (58) is provided with a torque regulator constituted by an axle (70) integral with the transmission cable (58) and on which is mounted for free rotation the pinion (68) which is clamped tightly between a shoulder (70a) of the said axle (70) and a shoulder (71a) of a sleeve (71) subjected to the action of an elastic member (72).

9. Device according to claim 7, characterized in that the tangent wheels (64, 55) are mounted for sliding in free rotation on the central axle (11) and are pushed under the action of an elastic member (77), against an abutment (80) integral with the said central pin (11) and against a shoulder (78) of the pinion (41) carrying with them the threaded screws (43), the said abutment (80) and the said shoulder (78) comprising the clawing members (82, 82a) which cooperate with corresponding clawing members provided on the contact faces of the tangent wheels (64, 55) and of which a stop ring integral with the central pin (11) permits the elastic connection of the said clawing members (82, 82a).

10. Device according to claim 1, characterized in that one of the push-members (24) is composed of two elements (24, 24') between which is arranged a compressed elastic member (44).

## Patentansprüche

1. Verstellvorrichtung für einen Rückspiegel, besonders für Fahrzeuge, mit einem auf dem Eckblech einer Fahrzeugtür befestigten und durch dieses hindurchgehenden Halteelement (2), so dass die Bedienungselemente (11, 43) in das Innere des Fahrzeuges zur Ausrichtung eines Rückspiegel-Gehäuses (1) und Spiegels um eine vertikale und um eine horizontale Achse gelangen können, wobei das genannte Halteelement (2) innen einen auf einer horizontalen Achse schwenkbar gelagerten, zylindrischen Körper (6) aufweist, der an einem Ende mit einem Befestigungsmittel (7) versehen ist, auf dem das Rückspietel-Gehäuse (1) um eine vertikale Achse schwenkbar gelagert ist, wobei der genannte Körper (6) eine zentrale Bohrung aufweist, in welcher eine Achse (11) drehbar gelagert ist, welche an einem Ende mit einem ersten Betätigungselement (12, 64) und an ihrem anderen Ende um eine horizontale Achse mit Führungsmitteln (13, 48) für den genannten Körper (6) ausgestattet ist, wobei der genannte Körper (6) zwei seitliche Bohrungen aufweist, in welchen zwei parallele Stangen (24, 43) gleitend gelagert sind, welche mit einem Ende mit einem zweiten Betätigungselement (55) verbunden und mit ihrem anderen Ende an dem Seiten (34) eines mit dem Gehäuse (1) um eine vertikale Achse verbundenen Bedienungselements (35) abgestützt sind, dadurch gekennzeichnet, dass die Mittelachse (11) auf der dem ersten Betätigungselement (12, 64) gegenüberliegenden Seite ein Antriebsrad (13) aufweist, das mit einem formschlüssig mit einem spiralenförmigen Nocken (48) verbundenen Zahnrad (47) in Eingriff steht, wobei die Aussenlinie (48a) des Nockens (48) mit einem auf einer Verlängerung (6A) des zylindrischen Körpers (6) vorgesehenen Vorsprung (49) in Kontakt gehalten wird.

2. Vorrichtung nach Anspruch 1, dadurch gekennzeichnet, dass der zylindrische Körper (6) von einem gegen das Halteelement (2) gestützten elastischen Organ (50) beansprucht ist, welches den Vorsprung (49) gegen den spiralenförmigen Nocken (48) zurückstösst.

3. Vorrichtung nach Anspruch 2, dadurch gekennzeichnet, dass zwischen dem Halteelement (2) und dem zylindrischen Körper (6) ein kreisbogenförmiges Lager (51) eingebaut ist, in welchem eine schraubenförmige Feder (50) angeordnet ist, die sich mit einem Ende an einer der Wände (52) des Halteelements (2) abstützt und mit dem anderen Ende an der Seite (53) des zylindrischen Körpers (6).

4. Vorrichtung nach Anspruch 1, dadurch gekennzeichnet, dass auf der Mittelachse (11), die das Antriebsrad (13) aufweist, welches mit dem mit dem spiralenförmigen Nocken (48) forschlüssig verbundenen Zahnrad (47) in Eingriff steht, ein erstes Transmissionsorgan (65) vergesehen ist, welches mit einem anderen, mit einem Antriebskabel formschlüssig verbundenen Transmissionsorgan (64) im Eingriff steht und dadurch dass ein zweites Transmissionsorgan (55) mit einem, mit einem anderen Antriebskabel (58) formschlüssig verbundenen Transmissionsorgan (56) im Eingriff steht, wobei das zweite Transmissionsorgan (55) mit einem Antriebsrad (41) formschlüssig verbunden ist, das mit zwei, auf einem Ende zweier Schrauben (43) mit entgegengesetzten Gewinden befestigten Antriebsrädern (42) im Eingriff steht, wobei die beiden Schrauben (43) in die Gewindebohrungen des zylindrischen Körpers (6) eingreifen und über zwei auf dem Ende der beiden Schrauben (43) abgestützten Stoss-Stangen (24) auf einen mit dem Gehäuse (1) des Rückspiegels formschlüssig verbundenen Schwengel (35) wirken.

5. Vorrichtung nach Anspruch 4, dadurch gekennzeichnet, dass die Transmissionsorgane (64, 55, 65, 56) aus einem Tangentenrad (64, 55) und einer Schnecke (65, 56) bestehen, auf welcher ein biegsames Transmissionskabel (58) über eine eingebettete Hohlwelle (57) befestigt ist.

6. Vorrichtung nach Anspruch 4 und 5, dadurch gekennzeichnet, dass die Transmissionskabel (58) mittels eines am Ende jedes Kabels befestigten Betätigungsknopfes handbetrieben werden.

7. Vorrichtung nach Anspruch 4 und 5, dadurch gekennzeichnet, dass jedes Kabel (58) mit einem elektrischen Getriebemotor (66) angetrieben wird.

8. Vorrichtung nach Anspruch 7, dadurch gekennzeichnet, dass das Antriebsrad (68) des Transmissionskabels (58) mit einem Drehmomentbegrenzer ausgestattet ist, der aus einer mit dem Transmissionskabel (58) formschlüssig verbundenen Achse (70) besteht und auf welchem das Antriebsrad (68) frei drehend gelagert ist und zwischen einer Schulter (70a) der genannten Achse (70) und einer Schulter (71a) einer von einem elastischen Organ (72) beanspruchten Hülse (71) festgehalten wird.

9. Vorrichtung nach Anspruch 7, dadurch gekennzeichnet, dass die Tangentenräder (64, 55) frei drehend gleitend auf der Mittelachse (11) gelagert sind und unter der Wirking eines elastischen Organs (77) jeweils gegen einen mit der Mittelachse (11) formschlüssig verbundenen Anschlag (80) und gegen eine Schulter (78) des die Schrauben (43) antreibenden Rades (41) zurückgestossen werden, wobei der genannte Anschlag (80) und die Schulter (78) Klauen (82, 82a) aufweisen, welche mit entsprechenden, auf der Kontaktseite der Tangentenräder (64, 55) vorgesehenen Klauen zusammenwirken und von denen eine mit der Mittelachse (11) formschlüssig verbundene Anschlagscheibe die elastische Verbindung der Klauen (82, 82a) ermöglicht.

10. Vorrichtung nach Anspruch 1, dadurch gekennzeichnet, dass eine der Stoss-Stangen (24) aus zwei Elementen (24, 24') besteht, zwischen denen ein elastisches Organ (44) zusammengedrückt gelagert ist.

FIG.1

0 007 861

FIG.2

FIG.3

0 007 861

**FIG.4**

**FIG.5**

3

FIG.6

FIG.7

FIG.8

FIG.9

**FIG.10**

**FIG.11**